# EUROPEAN PATENT SPECIFICATION

(11) **EP 0 900 423 B1**
(45) Date of publication and mention of the grant of the patent: **04.09.2002**
(21) Application number: 96923123.2
(22) Date of filing: 30.05.1996
(51) Int. Cl.: G06F 15/02, G06F 1/16

(54) **COMPUTER INCLUDING AT LEAST TWO DISPLAYS**
RECHNER MIT MINDESTENS ZWEI ANZEIGEN
ORDINATEUR COMPRENANT AU MOINS DEUX ECRANS

(43) Date of publication of application: 10.03.1999
(73) Proprietor: Hensel, Martin, 224 66 Lund (SE)
(72) Inventor: Hensel, Martin, 224 66 Lund (SE)
(74) Representative: Andersson, Björn E.
(86) International application number: SE9600709
(87) International publication number: WO97045794

(56) References cited:
- EP-A- 0 337 401
- EP-A- 0 390 611
- US-A- 5 202 844
- PATENT ABSTRACTS OF JAPAN, Vol. 1, No. 375, P-644; & JP,A,62 144 268, (BROTHER IND LTD), 27 June 1987.

## Description

### Field of the Invention

The present invention relates to a computer arrangement comprising one computer and at least two displays.

### Background Art

Different types of computers are today used to a great extent for processing and presenting of information. They often have a keyboard for input of information and a display for presentation thereof. The keyboard has a limited set of characters, which of course is disadvantageous to the user. The limited set of characters strongly deteriorates the possibilities of creative work, such as the writing of formulae and the drawing of figures. Moreover, a keyboard is an unwieldy implement especially since the noise of the keys being pressed may disturb people sitting in the vicinity of the computer.

Recently different types of so-called pen computers have been developed. These comprise a pen for input of information on a display. The display functions according to the touch screen technique, i.e. it senses the application of the pen, and the positions marked by the pen are shown on the display. Pen computers are used for e.g. filling in various kinds of forms. After the user has filled in the form, use is made of a character interpretation program for converting the filled-in characters into a code that is processable by the computer. The drawback of this method, however, is that there is today no character interpretation program available that functions in a satisfactory manner. The filled-in characters are interpreted incorrectly, which may have disastrous consequences.

A further considerable drawback of today's computer technique appears when the user wants to make notes regarding information shown on a display. The user must then put up with external aids such as pen and paper or another computer. It goes without saying that this is disadvantageous when the user is reading a textbook or a scientific publication on the display and wants to make notes concerning the text presented on the display.

### Object of the Invention

The object of the present invention is to provide a computer arrangement which obviates the above-mentioned drawbacks of prior art technique.

### Summary of the Invention

According to the invention, a computer arrangement has therefore been provided, which comprises one and only one computer and at least two displays according to claim 1. The invention is based on the knowledge that at least two displays are necessary along with a single computer for simultaneous active presentation and active input of information to be effected. The inventive computer arrangement permits a user to read information presented on a display while inputting notes on another display. By simultaneousness is here meant that the user does not notice an interruption in any of the displays since they are always active simultaneously. For instance, for a student attending a lecture, this is an excellent implement; the computer arrangement replaces unwieldy course books and scribbling pads. Moreover, the touch screen technique makes the input smooth and easy while those sitting around the user are not disturbed, in contrast to the case involving computer arrangements which utilise a keyboard for input.

According to a preferred embodiment as defined in claim 2, the computer arrangement comprises software for linking parts of the information presented on the one display and parts of the information presented on the other display. The software can easily be produced by a person skilled in the art by means of known software technique. The linking means that the information that is input on a display is mapped onto, or connected to, information presented on a display. The user selects which parts of the information presented on the displays that are to be linked: the entire content on the displays or parts thereof. In the example involving a student at a lecture, this means that he may make notes concerning a certain page in the textbook, for instance an explanation of a certain term, and enclose these notes with the page.

The invention also comprises according to claim 3 means for storing the linked information. The means may consist of a hard disk, a floppy disk drive with a disk or some other known means for storing of data. Whenever the user wants to see the stored, linked information, this is fetched from the storing means and presented on one or more displays.

The display intended for input and, of course, presentation of information controls according to claim 4 the display intended for presentation of information. This controlling is carried out by means of software in the computer arrangement. This software is produced by means of suitable software technique.

According to claim 5, the computer arrangement comprises software for presenting on the display intended for presentation all the information or parts of the information that is input on the display intended for input.

According to claim 6, the computer arrangement comprises means for storing all the information or parts of the information that is presented on one of the displays. These means may consist of one or some of the means mentioned above in connection with claim 3.

According to a preferred embodiment as defined in claim 7, the computer arrangement comprises one or more connecting means for connecting external units. Examples of such units are printer, scanner, digital camera, CD-ROM drive, different types of modem, memories, keyboard, mouse, other computers, displays etc.

According to claim 8, the computer arrangement also comprises an orienting means for rotating the information presented on the displays by steps of 90 degrees. This results in easy adaptation of the location of the computer arrangement as needed. Moreover, this means that the user-friendliness of the computer arrangement is the same irrespective of whether the user is right-handed or left-handed. The software belonging to the orienting means is produced according to known software technique.

According to claim 9, the computer arrangement comprises on at least one of the displays at least one simulated set of keys which is produced by means of the touch screen technique known to those skilled in the art. Also users who are accustomed to and maybe dependent on an ordinary set of keys may thus gain great advantages from the inventive computer arrangement.

### Brief Description of the Drawings

The invention will now be described in more detail with reference to the accompanying drawings, in which
Fig. 1 is a block diagram of a preferred embodiment of the computer arrangement according to the invention, and
Fig. 2 is a schematic perspective view of a preferred embodiment of the computer arrangement according to the invention.

### Description of a Preferred Embodiment

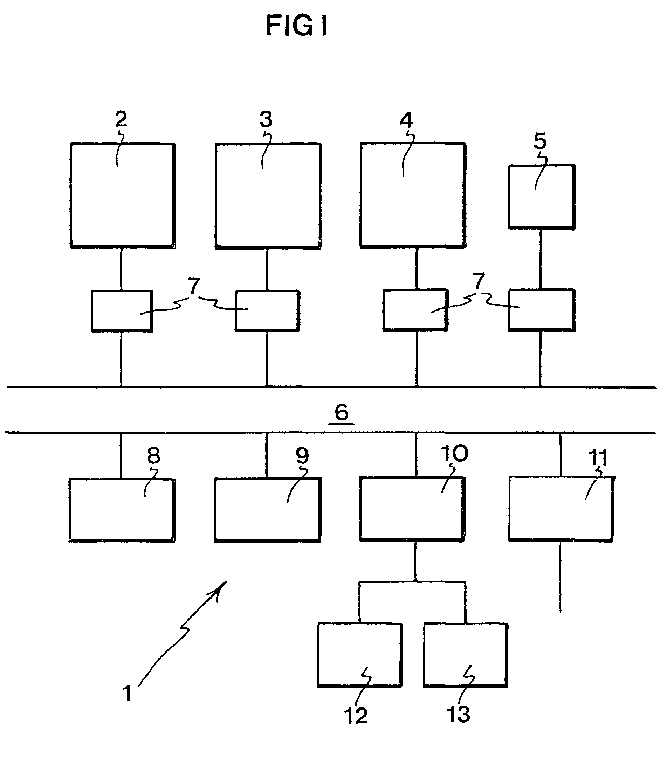

Fig. 1 shows a block diagram of a computer arrangement 1 according to a preferred embodiment. The computer arrangement 1 comprises a display 2, which in this embodiment is intended only for presentation of information, hereinafter referred to as reading display; a display 3 intended for input of information, hereinafter referred to as writing display; a touch unit 4 enabling input on the writing display 3 by means of the touch screen technique; and a keyboard 5 comprising a number of keys for activating different functions of the computer arrangement 1. The computer arrangement 1 also comprises a bus 6 for commands and data, to which the reading display 2, the writing display 3, the touch unit 4 and the keyboard 5 are connected via drive units 7. Furthermore, the computer arrangement 1 comprises a central processing unit 8 which comprises a processor; a memory unit 9; a disk control 10; and an interface 11 to external units. The central processing unit 8, the memory unit 9, the disk control 10 and the interface 11 are all connected to the common bus 6. Besides, the disk control 10 is connected to a hard disk 12 and a disk drive 13 for controlling these. The computer arrangement 1 also comprises software for obtaining the functions described below. Such software will not be described here. The man skilled in the art has no difficulty in generating such software.

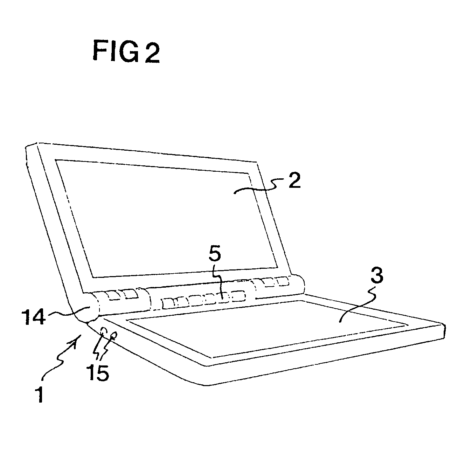

Fig. 2 is a perspective view of the computer arrangement 1 according to a preferred embodiment. The computer arrangement 1 is designed as a portable computer which can be folded to a closed unit when not in operation. To accomplish the folding, the computer arrangement 1 comprises a hinge 14. The reading display 2, the writing display 3 and the keyboard 5 can be seen in Fig. 2. Fig. 2 also shows connecting means 15 for connecting various external units, such as those mentioned above. According to this embodiment, the computer arrangement 1 is designed as a binder having a lower weight than conventional computer arrangements, which means that it will be easy to handle and, for instance, can be piled just as a binder in a bookcase.

The reading screen 2 presents information which via the bus has been fetched from e.g. the hard disk or from a disc. On the writing display 3 input takes place by means of the touch screen technique. This technique means that a keyboard is not required for the input. On the contrary, a pen or a finger may be used since the writing display senses any touch. Besides, the writing display 3 of the computer arrangement 1 is according to the embodiment suitably provided with a simulated set of keys, the user inputting the corresponding characteristics by touching the desired character field on the writing display 3. As mentioned above, an important advantage of the inventive computer arrangement 1 is that presentation on the reading screen 2 actively takes place "simultaneously" as input takes place on the writing display 3. The user does not notice any interruption between the two functions reading and writing. A further considerable advantage is that the need of a keyboard is obviated. The possibility of using instead a pen or a finger for making notes on the writing display 3, which originate from, for instance, the information presented on the reading display 2, obviates the restrictions resulting from a keyboard. There are in fact many applications where a keyboard fails, such as when drawing technical sketches, graphs, formulae and the like. When a keyboard is used, such applications necessitate special programs which are expensive and often difficult to obtain, if at all available. To rely on such technique when writing, for instance, scientific thoughts and ideas is impractical. The inventive computer arrangement 1 renders it possible for e.g. a scientist to quickly write on the writing display 3 creative and complicated lines of thought and sketches without using peripheral equipment and expensive special programs, while studying on the reading display 2 information forming the basis of his lines of thoughts. Moreover, the invention permits the notes to be made by means of alphabets other than the Latin, for instance the Greek or Cyrillic alphabet. This means in turn that the inventive computer arrangement 1 is an excellent aid when translating text from one alphabet to another. Needing to use a single computer for the above and many other applications is unique.

All controlling of the presentation of information on the reading display 2 takes place from the writing display 3. The synchronisation and connection between the reading display 2 and the writing display 3 are carried out by means of an executive program. The computer arrangement 1 comprises software for presenting on the writing display 3 menus, in which commands can be selected for the controlling of the functions of the computer arrangement 1. These functions include fetching of information from the memory unit 9, the hard disk 12, the disk drive 13 or an external unit via the interface 11 for presentation on the reading display 2; connecting of selected parts of the information presented on the reading display 2 to selected parts of the information input on the writing display 3; storing of the connected or linked information in the memory unit 9, the hard disk 12, the disk drive 13 or an external unit via the interface 11; etc.

The keyboard 5 comprises keys for separate switching on and off of the entire computer arrangement 1, the reading display 2 and the writing display 3 separately. The writing display 3 can be used separately and independently of the reading display 2. Besides there are keys for conventional display adjustments and an orientation key. The orientation key controls the orientation of the information presented on the displays 2, 3 in relation to the computer arrangement 1, i.e. by the user pressing the orienting key, the contents on the displays 2, 3 are rotated by steps of 90 degrees. This means that the computer arrangement 1 can be turned in the desired position as needed. This possibility of orientation together with the hinge 14 afford great flexibility in respect of working position. It is in fact well known to reduce the risk of joint and muscle injuries by changing the working position at regular intervals. For instance, the user may work with the writing display 3 in a horizontal position and the reading display 2 in a vertical position, or with both in a horizontal position. Depending on whether the user is right-handed or left-handed, he may have the writing display 3 on the right and the reading display 2 on the left or vice versa.

The construction according to this preferred embodiment with a dedicated reading display 2 and a dedicated writing display 3 confers the great advantage that the definition of the respective displays can be optimised for reading and for writing, respectively. For instance, letting the writing display 3 be a black-and-white display means that excellent definition can be achieved at a lower cost than for the corresponding definition of a colour screen. A black-and-white writing screen 3 is in most cases sufficiently functional when the computer arrangement 1 is used for notes made by hand.

### Alternative Embodiments

Several modifications of the inventive computer arrangement are of course possible within the scope of the invention. Some examples follow below.

The displays can be colour displays or black-and-white displays, as required.

Even if the computer arrangement according to the preferred embodiment is designed as a portable computer, it may be more or less stationary.

The computer arrangement may also comprise other types of memory and storage units than the above-mentioned, such as a CD-ROM drive.

The above-described block diagram is only one example of a suitable embodiment, and other constructions are possible without deviating from the inventive concept.

The number of connecting means for external units may vary according to application.

## Claims

1. A computer arrangement (1) comprising one and only one computer and at least two displays (2, 3), **characterised in that** one of the displays (2, 3) is adapted at least to present information, and another of the displays (2, 3) is adapted to input information by means of the touch screen technique, the two displays (2, 3) being adapted to be active simultaneously.

2. A computer arrangement (1) as claimed in claim 1, **characterised in that** it comprises software for linking all the information or parts of the information presented on the one display (2 or 3) and all the information or parts of the information presented on the other display (2 or 3).

3. A computer arrangement (1) as claimed in claim 2, **characterised in that** it comprises means for storing the linked information.

4. A computer arrangement (1) as claimed in any one of the preceding claims, **characterised in that** it comprises software for controlling, from the display (3) intended for input of information, the display (2) intended for presentation of information.

5. A computer arrangement (1) as claimed in any one of the preceding claims, **characterised in that** it comprises software for presenting, on the display (2) intended for presentation of information, information that is input on the display (3) intended for input of information.

6. A computer arrangement (1) as claimed in any one of the preceding claims, **characterised in that** it comprises means for storing the information presented on one of the displays (2, 3).

7. A computer arrangement (1) as claimed in any one of the preceding claims, **characterised in that** it comprises at least one connecting means (15) for connecting an external unit.

8. A computer arrangement (1) as claimed in any one of the preceding claims, **characterised in that** it comprises an orienting means for rotating the information presented on the displays (2, 3) by steps of 90 degrees, such that the computer arrangement (1) can be turned by steps of 90 degrees.

9. A computer arrangement (1) as claimed in any one of the preceding claims, **characterised in that** the display (3) intended for input of information comprises at least one simulated keyboard which is produced by means of the touch screen technique.

## Patentansprüche

1. Eine Computeranordnung (1) mit einem einzigen Computer und mindestens zwei Anzeigen (zwei, drei), **dadurch gekennzeichnet, daß** eine der Anzeigen (2, 3) zumindest gestaltet ist, um Informationen zu präsentieren, und eine andere der Anzeigen (2, 3) gestaltet ist, um Informationen mittels der Berührungsbildschirmtechnik einzugeben, wobei die zwei Anzeigen (2, 3) gestaltet sind, um simultan aktiv zu sein.

2. Computeranordnung (1) nach Anspruch 1, **dadurch gekennzeichnet, daß** sie Software zum Verbinden der gesamten Information beziehungsweise von Teilen der Information, die auf der einen Anzeige (2 oder 3) präsentiert wird, und der gesamten Information beziehungsweise von Teilen der information, die auf der anderen Anzeige (2 oder 3) präsentiert wird, umfaßt.

3. Computeranordnung (1) nach Anspruch 2, **dadurch gekennzeichnet, daß** sie Mittel zum Speichern der verbundenen Informationen umfaßt.

4. Computeranordnung (1) nach irgendeinem der vorangehenden Ansprüche, **dadurch gekennzeichnet, daß** sie Software zum Steuern der zur Präsentation von Informationen vorgesehenen Anzeige (2) von der zur Eingabe von Informationen vorgesehenen Anzeige (3) umfaßt.

5. Computeranordnung (1) nach irgendeinem der vorangehenden Ansprüche, **dadurch gekennzeichnet, daß** sie Software zum Präsentieren von Informationen, die auf der zur Eingabe von Informationen vorgesehenen Anzeige (3) eingegeben ist, auf der zur Präsentation von Informationen vorgesehenen Anzeige (2) umfaßt.

6. Computeranordnung (1) nach irgendeinem der vorangehenden Ansprüche, **dadurch gekennzeichnet, daß** sie Mittel zum Speichern der auf einer der Anzeigen (2, 3) präsentierten Informationen umfaßt.

7. Computeranordnung (1) nach irgendeinem der vorangehenden Ansprüche, **dadurch gekennzeichnet, daß** sie zumindest ein Anschlußmittel (15) zum Anschließen einer externen Einheit umfaßt.

8. Computeranordnung (1) nach irgendeinem der vorangehenden Ansprüche, **dadurch gekennzeichnet, daß** sie ein Ausrichtmittel zum Drehen der auf den Anzeigen (2, 3) präsentierten Informationen um 90 Grad-Schritte umfaßt, so daß die Computeranordnung (1) um 90 Grad Schritte gedreht werden kann.

9. Computeranordnung (1) nach irgendeinem der vorangehenden Ansprüche, **dadurch gekennzeichnet, daß** die zur Eingabe von Informationen vorgesehene Anzeige (3) zumindest eine simulierte Tastatur umfaßt, die mittels der Berührungsbildschinntechnik erzeugt ist.

## Revendications

1. Configuration d'ordinateur (1) comprenant un, et seulement un, ordinateur et au moins deux écrans (2, 3), **caractérisée en ce que** l'un des écrans (2, 3) est adapté au moins à la présentation d'informations, et un autre des écrans (2, 3) est adapté à la saisie d'informations au moyen de la technique d'écran tactile, les deux écrans (2, 3) étant adaptés à un fonctionnement simultané.

2. Configuration d'ordinateur (1) selon la revendication 1, **caractérisée en ce qu'**elle intègre un logiciel de liaison de toutes les informations ou informations partielles présentées sur le premier écran (2 ou 3) et de toutes les informations ou informations partielles présentées sur l'autre écran (2 ou 3).

3. Configuration d'ordinateur (1) selon la revendication 2, **caractérisée en ce qu'**elle intègre des moyens de stockage des informations liées entre elles.

4. Configuration d'ordinateur (1) selon l'une quelconque des revendications précédentes, **caractérisée en ce qu'**elle intègre un logiciel de contrôle, depuis l'écran (3) destiné à la saisie des informations, de l'écran (2) destiné à la présentation des informations.

5. Configuration d'ordinateur (1) selon l'une quelconque des revendications précédentes, **caractérisée en ce qu'**elle intègre un logiciel de présentation, sur l'écran (2) destiné à la présentation des informations, des informations saisies sur l'écran (3) destiné à la saisie des informations.

6. Configuration d'ordinateur (1) selon l'une quelconque des revendications précédentes, **caractérisée en ce qu'**elle intègre des moyens de stockage des informations présentées sur l'un des écrans (2, 3).

7. Configuration d'ordinateur (1) selon l'une quelconque des revendications précédentes, **caractérisée en ce qu'**elle intègre au moins un moyen de connexion (15) en vue de la connexion d'une unité externe.

8. Configuration d'ordinateur (1) selon l'une quelconque des revendications précédentes, **caractérisée en ce qu'**elle intègre un moyen d'orientation en vue de la rotation des informations présentées sur les écrans (2, 3) par pas de 90 degrés, de telle sorte que la configuration d'ordinateur (1) puisse subir une rotation par pas de 90 degrés.

9. Configuration d'ordinateur (1) selon l'une quelconque des revendications précédentes, **caractérisée en ce que** l'écran (3) destiné à la saisie des informations intègre au moins un clavier simulé produit au moyen de la technique d'écran tactile.
